# Europäisches Patentamt
# European Patent Office
# Office européen des brevets

(19)

(11) Veröffentlichungsnummer: **0 016 263**
**B1**

(12)

# EUROPÄISCHE PATENTSCHRIFT

(45) Veröffentlichungstag der Patentschrift:
**06.07.83**

(21) Anmeldenummer: **79200190.1**

(22) Anmeldetag: **17.04.79**

(51) Int. Cl.³: **H 01 C 7/02,** H 01 C 17/12,
G 01 K 7/18, H 01 C 7/00

(54) **Dünnschichtwiderstand mit grossem Temperaturkoeffizienten und Verfahren zu dessen Herstellung.**

(30) Priorität: **21.03.79 CH 2633/79**

(43) Veröffentlichungstag der Anmeldung:
**01.10.80 Patentblatt 80/20**

(45) Bekanntmachung des Hinweises auf die Patenterteilung:
**06.07.83 Patentblatt 83/27**

(84) Benannte Vertragsstaaten:
**CH DE GB SE**

(56) Entgegenhaltungen:
**DE-A-2 724 679**
**FR-A-2 294 610**
**GB-A-1 319 765**
**US-A-3 449 828**
**US-A-3 845 443**
**US-A-4 129 848**

(73) Patentinhaber: **BBC Aktiengesellschaft Brown, Boveri & Cie., Haselstrasse, CH-5401 Baden (CH)**

(72) Erfinder: **Berner, Gianni, Dr., Ländliweg 10, CH-5401 Baden (CH)**
Erfinder: **Burkard, Hans, Dr., Mitteldorfweg 209, CH-5243 Mülligen (CH)**
Erfinder: **Buschor, Franz, Dr., Boldistrasse 35, CH-5415 Nussbaumen (CH)**

Dünnschichtwiderstand mit großem Temperaturkoeffizienten und Verfahren zu dessen Herstellung

Die vorliegende Erfindung betrifft einen Dünnschichtwiderstand gemäß dem Oberbegriff des Anspruchs 1 sowie ein Verfahren zur Herstellung dieses Widerstandes.

Dünnschichtwiderstände bestehen aus einem flächigen Substrat, auf das durch unterschiedliche Verfahren eine dünne Schicht eines reinen Metalls oder einer Metallegierung aufgebracht wird. Die Form der Widerstandsbahn wird in den meisten Fällen durch eine Maske festgelegt und das von der Maske unbedeckte, überflüssige Schichtmaterial in einem weiteren Prozeß abgetragen.

Aus der Druckschrift DE-A-2 724 679 ist ein Verfahren bekannt, bei dem eine mehrere Mikrometer dicke Widerstandsfolie auf einen isolierenden Träger aufgeklebt oder durch chemische oder elektrochemische Abscheidung bzw. durch Vakuumaufdampfung aufgebracht wird. Als Abtrageprozeß wird das aus der Technik bekannte Ionenstrahlätzen verwendet.

Um Metallschichten geringerer Dicke und entsprechend höherem Widerstand mit reproduzierbaren Eigenschaften zu erhalten, wird überwiegend das Verfahren der Kathodenzerstäubung eingesetzt. Die Haftung einer in dieser Weise auf das Substrat aufgebrachten Schicht ist abhängig von der Art des Metalls und den bei der Zerstäubung benutzten Parametern. Aufgestäubte Schichten aus Titan, wie sie gemäß FR-A-2 294 610 als Unterlage weiterer, gut leitender Metallschichten benutzt werden, werfen hinsichtlich der Haftung keine Probleme auf.

Entsprechendes gilt für die in US-A-3 449 828 beschriebene Widerstandsschicht aus einer Nickel-Chrom-Legierung.

Dagegen werden in der Druckschrift US-A-4 129 848 bereits zusätzliche, haftverbessernde Maßnahmen für eine Platinschicht auf einem Siliziumsubstrat mit $SiO_2$-Oberfläche erwähnt, die aus einem Anrauhen der Oberfläche durch Erzeugung von Ätzgrübchen und einer Unterteilung des Aufstäubeprozesses bestehen.

Ähnliche Probleme ergeben sich bei dem Metall Nickel, das wegen seines hohen Temperaturkoeffizienten für Widerstandsthermometer besonders geeignet ist. Da die Größe des Temperaturkoeffizienten von der Reinheit der aufgestäubten Schicht abhängt, ist es wünschenswert, außerordentlich reine Nickelschichten auf dem Substrat zu erzeugen. Mit wachsender Reinheit verschlechtert sich jedoch die Haftung, weil gerade atomare Verunreinigungen in der Metallschicht haftvermittelnd wirken.

Wird die Nickelschicht, wie in GB-A-1 319 765 und US-A-3 845 443 beschrieben, nach der üblichen Methode der Kathodenzerstäubung aufgebracht, werden von dem bei der Zerstäubung benötigten Fremdgas genügend Atome in die Schicht eingebaut, um eine ausreichende Haftung auf dem Substrat zu gewährleisten. Andererseits wird aber der Temperaturkoeffizient in unkontrollierbarer Weise beeinflußt und verkleinert, so daß sich bei der Anwendung in größerem Maßstab Schwierigkeiten ergeben, weil der Temperaturkoeffizient nicht festgelegt ist.

Der vorliegenden Erfindung liegt daher die Aufgabe zugrunde, einen Dünnschichtwiderstand mit hoher Temperaturempfindlichkeit für den Serieneinsatz zu schaffen.

Die Aufgabe wird erfindungsgemäß dadurch gelöst, daß die Nickelschicht außerordentlich rein ist, der Temperaturkoeffizient zwischen $3 \cdot 10^{-3}/°C$ und $6,2 \cdot 10^{-3}/°C$ beträgt und die Haftschicht aus einem Metall besteht.

Bei einer bevorzugten Ausführungsform ist das Metall der Haftschicht Nickel.

Bei einer weiteren bevorzugten Ausführungsform ist das Metall der Haftschicht Tantal.

Das Verfahren zur Herstellung dieses Dünnschichtwiderstandes mittels Kathodenzerstäubung ist dadurch gekennzeichnet, daß die Haftschicht ohne negative Vorspannung an der Anode erzeugt, und zum Reinigen der Widerstandsschicht durch partielle Umkehrung der Kathodenzerstäubung die Anode mit den Substraten an eine negative Vorspannung von −150 bis −50 Volt gelegt wird.

Nachfolgend wird die Erfindung anhand einiger Beispiele des neuen Dünnschichtwiderstands und des Verfahrens zu seiner Herstellung mit Hilfe der Figuren beschrieben. Es zeigt

Fig. 1 die grafische Darstellung des Temperaturkoeffizienten des elektrischen Widerstands in Abhängigkeit von der während der Kathodenzerstäubung verwendeten Bias-Spannung,

Fig. 2 die grafische Darstellung des Temperaturkoeffizienten des elektrischen Widerstands in Abhängigkeit von der Schichtdicke,

Fig. 3 die grafische Darstellung des Temperaturkoeffizienten des elektrischen Widerstands in Abhängigkeit von der Tempertemperatur,

Fig. 4 den schematischen Schnitt durch eine Ausführungsform des neuen Dünnschichtwiderstands,

Fig. 5 die Draufsicht auf den Widerstand gemäß Fig. 4 und

Fig. 6 die Seitenansicht einer Ausführungsform des neuen Dünnschichtwiderstands.

Zur Herstellung des neuen Dünnschichtwiderstands wird eine Trägerplatte oder ein Substrat verwendet, das vorzugsweise aus Aluminiumoxid oder Glas besteht. Geeignete Platten mit einer Flächengröße von etwa $5 \cdot 5 \, cm^2$ und einer Dicke von etwa 0,6 mm sind handelsüblich. Eine Mehrzahl von beispielsweise 20 solcher Trägerplatten bilden eine Charge oder Batch, die gemeinsam bearbeitet wird. Batch-Verfahren sind aus der Herstellung von Halbleiterbauelementen bekannt und haben den Vorteil, daß größere Serien gleichartiger Bauelemente hergestellt werden können, ohne daß der Verbrauch an Hilfsmaterial, der apparative und der zeitliche Aufwand wesentlich größer sind als bei der Herstellung von Einzelstücken.

Die zu einem Batch gehörenden Trägerplatten werden zuerst in mehreren Arbeitsgängen gewaschen und getrocknet und dann in eine zum Kathodenzerstäuben von Metallen geeignete Vorrichtung, vorzugsweise eine sogenannte planare Dioden-Sputter-Anlage eingebracht. Solche Vorrichtungen sind heute handelsüblich und jedem Fachmann bekannt, weshalb auf eine ausführliche Beschreibung ausdrücklich verzichtet wird.

Das Batch der Trägerplatten wird dann zuerst mittels Kathodenzerstäubung nachgereinigt. Dazu wird die elektrische Spannung so angelegt, daß die Ionen auf die Trägerplatten aufprallen und auf der Oberfläche angelagerte Verunreinigungen und möglichst sogar eine sehr dünne Oberflächenschicht des Materials der Trägerplatte abgetragen, was der Fachmann als Sputter-Etching bezeichnet.

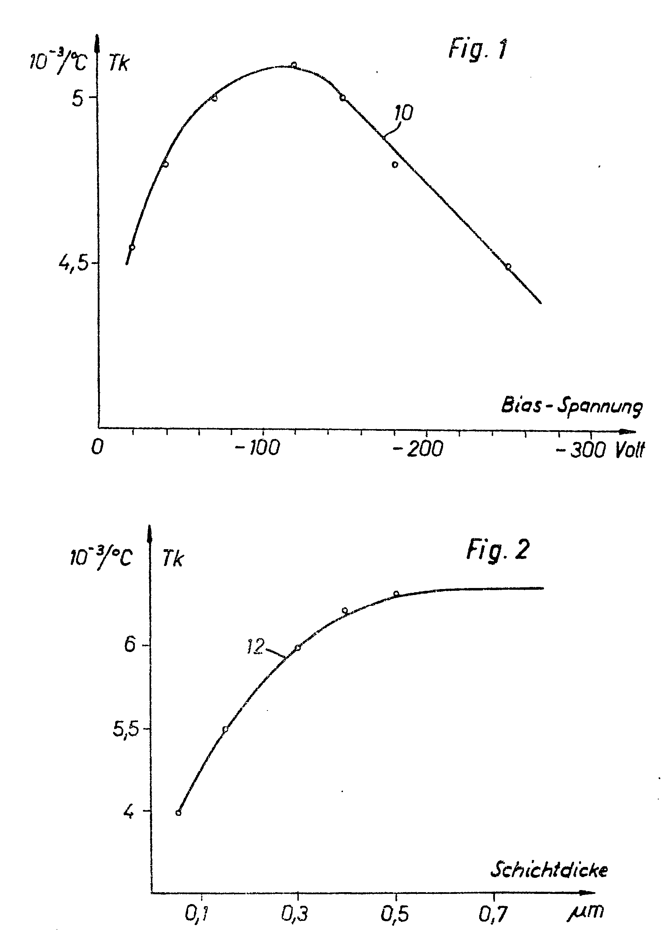

Nach dem Etching wird die anliegende Spannung umpolarisiert, und es wird eine Schicht aus Nickel auf die Trägerplatte aufgestäubt. Das Aufstäuben des Nickels erfolgt vorteilhafterweise in einer Argon-Atmosphäre bei einem Druck von etwa $2 \cdot 10^{-2}$ Torr (2,7 Pascal). Um das Einbauen gasförmiger oder sonstiger Verunreinigungen in die Schicht zu vermeiden, wird die Kathodenzerstäubung in der Form des »Biassputterns« ausgeführt, das von Maissel und Glang im Handbook of Thin Film Technology, erschienen bei McGraw Hill 1970 ausführlich beschrieben ist und worauf hier ausdrücklich hingewiesen wird. Beim Bias-Sputtering mit Hochfrequenz bildet sich an der zu zerstäubenden Kathode eine relativ hohe, bezüglich des Gehäuses der Anlage negative Spannung aus und an der Anode mit den zu bestäubenden Substraten eine vergleichsweise kleine negative Spannung. Typische Werte sind $-1000$ V an der Kathode und $-80$ V im Bereich der Substrate. Bei dieser Art der Kathodenzerstäubung wird gleichzeitig mit dem Auftragen von Nickel auf das Substrat immer wieder ein kleiner Teil des aufgestäubten Materials und nach Ansicht der Autoren des oben genannten Handbook vorzugsweise in die Schicht eingebautes Gas abgetragen, so daß eine außerordentlich reine aufgestäubte Schicht zurückbleibt. Der Einfluß des Bias-Sputterns auf den Temperaturkoeffizienten des elektrischen Widerstands ist in Fig. 1 am Beispiel einer Nickelschicht mit einer Dicke von 1400 Å gezeigt. Aus der Kurve 10 der gemessenen Werte ist deutlich zu erkennen, daß der Temperaturkoeffizient seinen für diese Dicke höchsten Wert von etwa $5{,}1 \cdot 10^{-3}/°C$ erreicht, wenn die Bias-Spannung etwas mehr als $-100$ V beträgt. Wiederum nach Ansicht der Autoren des oben genannten Handbook weist bei dieser Bias-Spannung die aufgestäubte Schicht die größte Reinheit auf. Wird die Bias-Spannung weiter erhöht, dann wird auch die Energie auftreffender Argon-Ionen vergrößert, die dann dauerhaft in die Schicht eingebaut werden und damit deren Reinheitsgrad nachteilig beeinflussen.

Das beschriebene Bias-Sputtern ermöglicht eine Beschichtungsgeschwindigkeit von etwa 320 Å/min und wird gewöhnlich so lange fortgesetzt, bis die Gesamtdicke der Schicht den gewünschten Wert erreicht. Bei kleinen Schichtdicken muß beachtet werden, daß der Temperaturkoeffizient des elektrischen Widerstands ab einem Grenzwert mit abnehmender Schichtdicke ebenfalls abnimmt (Size-Effekt). In Fig. 2 ist eine Kurve 12 für die Dickenabhängigkeit des Temperaturkoeffizienten des elektrischen Widerstands für eine unter optimalen Bedingungen aufgestäubte Nickelschicht gezeigt. Die Abnahme des Temperaturkoeffizienten mit der Abnahme der Schichtdicke gibt aber die Möglichkeit, Dünnschichtwiderstände herzustellen, deren Temperaturkoeffizient kleiner als der des massiven Metalls ist und in einem Bereich zwischen etwa $3 \cdot 10^{-3}/°C$ bis $6 \cdot 10^{-3}/°C$ liegt.

Die aufgestäubte Nickelschicht wird dann, wie das von der Herstellung von Halbleiterbauelementen jedem Fachmann bekannt ist, mit einer Galvanomaske aus einem negativ wirkenden Photoresist abgedeckt. Der Photoresist wird dann mit dem Bild der gewünschten Anordnung von Anschlußflächen belichtet, danach die unbelichteten Bereiche des Photoresists ausgewaschen. Auf den nicht mehr abgedeckten Bereichen der Nickelschicht, bzw. der in einer weiteren Ausführung als Hilfsschicht darüber aufgebrachten Kupfer- oder Goldschicht wird durch galvanische Abscheidung von typisch 2 µm Nickel und 2 µm Gold eine löt- und schweißbare Anschlußfläche aufgebaut. Nach dem Entfernen des oben beschriebenen negativ wirkenden Photoresists und dem Wegätzen der in einer weiteren Ausführungsform vorhandenen Kufper- oder Goldschicht wird das Substrat mit einer Ätzmaske aus beispielsweise positiv wirkendem Photoresist abgedeckt. Der Photoresist wird dann mit einem Bild der gewünschten Anordnung von Widerstandsbahnen und Kontaktflächen belichtet, danach die belichteten Bereiche des Photoresists wieder ausgewaschen und die nicht mehr abgedeckten Bereiche der Nickelschicht beispielsweise durch Eintauchen in eine flußsäure- und salpetersäurehaltige Lösung weggeätzt werden. Beim Konstruieren des Bilds der Anordnung von Widerstandsbahn und Kontaktflächen ist zu beachten, daß der elektrische Leitungswiderstand durch die Dicke der aufgedampften Schicht und durch die Länge und Breite der Widerstandsbahn bestimmt wird. Der Leitungswiderstand wird bei dünnen Schichten im allgemeinen als Widerstand eines an gegenüberliegenden Seiten kontaktierten Quadrats angegeben. Für die hier interessierenden Nickelschichten kann der Widerstand zwischen etwa 2 Ohm/Quadrat für eine Schichtdicke von einigen 100 Å bis etwa 0,1 Ohm/Quadrat für eine Schichtdicke von etwa 8000 Å geändert werden. Die beiden anderen Größen, Länge und Breite der Widerstandsbahn, werden bei dünnen Schichten mit einem Parameter $A_A$ bezeichnet, der dem Quotienten aus der Länge der Widerstandsbahn und dessen Breite entspricht. Der quantitative Wert dieses Parameters ist insbesondere durch die Photoätzmaske bestimmt. Der Maximalwert für $A_A$ wird durch die für die Widerstandsbahn verfügbare Fläche auf der Trägerplatte bzw. zwischen den Anschlußflächen begrenzt und durch die geforderte Ausbeute des Herstellverfahrens, weil zu schmale Widerstandsbahnen nicht mit der geforderten Gleichmäßigkeit geätzt werden können, was die Ausbeute verringert. Praktisch realisierbare Werte für $A_R$, die eine industrielle Ausbeute des Herstellverfahrens ermöglichen, liegen zwischen 1 bis über 10 000.

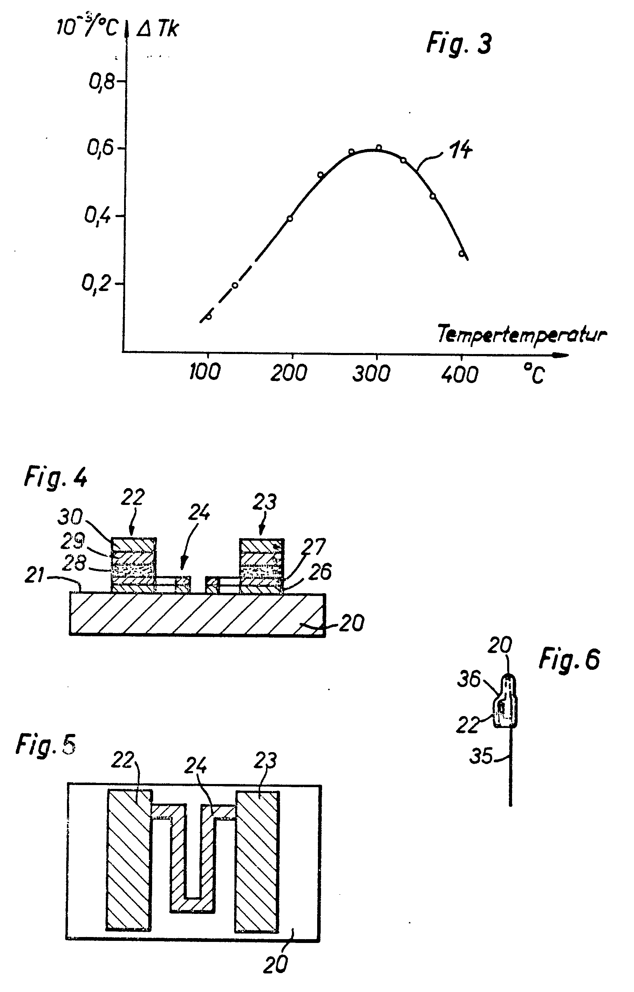

Die fertig strukturierten Widerstandsschichten werden schließlich getempert, womit die angestrebte Widerstands-Temperatur-Charakteristik eingestellt und stabilisiert wird. Die in Fig. 3 gezeigte Kurve 14 entspricht dem Temperaturkoeffizienten des elektrischen Widerstands in Abhängigkeit von der Tempertemperatur für eine Schichtdicke von 1400 Å. Die Abnahme des Temperaturkoeffizienten bei Temperaturen über etwa 300°C wird mit einer zunehmenden Oxidation der Schicht erklärt, die deren wirksame Schichtdicke verringert und damit den oben erwähnten Size-Effekt begünstigt. Praktisch erprobte Temperbedingungen sind beispielsweise 300°C während 5 Std.

Die einzelnen Widerstände jeder Trägerplatte werden dann in bekannter Weise mit einem handelsüblichen Laserabgleichautomaten auf den angestrebten Wert abgeglichen, die Trägerplatten in Teile, von denen jedes einen Widerstand trägt, zerbrochen und an den Anschlußflächen jedes Widerstands ein Anschlußdraht befestigt. Dabei kann beispielsweise eine quadratische Trägerplatte von 5 cm Seitenlänge in zirka 80 Teile mit einer quadratischen Fläche von etwa 5 mm Seitenlänge zerbrochen werden, von denen jeder einen Dünnschichtwiderstand trägt. Zum Schluß werden die Widerstände in ebenfalls bekannter Weise verkapselt, was einfacherweise durch Wirbelsinterumhüllung mit einem Kunststoff ausgeführt wird.

Wie die praktische Erfahrung gezeigt hat, ist die Haftfestigkeit sehr reiner Nickelschichten, die auf die oben beschriebene Art ohne Haftschicht auf eine Trägerschicht aus Aluminiumoxidkeramik aufgetragen wurden, für den vorgesehenen Zweck nicht ausreichend. Um die Haftfestigkeit zu verbessern, wird darum vorzugsweise eine zusätzliche Haftschicht verwendet. Diese Haftschicht kann aus Nickel bestehen, das ohne die oben erwähnte Bias-Spannung aufgestäubt wurde oder aus einem anderen Metall, wie beispielsweise Chrom, Titan oder Tantal. Besonders bewährt haben sich Tantalschichten mit einer Dicke zwischen 20 bis 100 Å. Tantal weist eine außerordentliche Haftfestigkeit auf Aluminiumoxidkeramik oder Glas auf, hat in der Form von $\beta$-Ta einen hohen elektrischen Leitungswiderstand, der die Thermometercharakteristik der Nickelwiderstandsschicht praktisch nicht beeinflußt und neigt nicht dazu, in die Nickelwiderstandsschicht einzudiffundieren und damit auf lange Zeit deren Eigenschaften zu verändern.

Weiter versteht sich, daß die Abreißkraft an den Anschlußdrähten wesentlich erhöht werden kann, wenn diese auf einer galvanischen Metallisierung gelötet oder geschweißt sind.

Auf die schematische Darstellung der einzelnen Arbeitsgänge des beschriebenen Herstellverfahrens, insbesondere das Aufstäuben der Schichten, das Abdecken mit einer Galvanomaske zum Metallisieren der Anschlußflächen, das Abdecken mit einer Ätzmaske zum Ätzen der Widerstandsbahn usw., wird hier ausdrücklich verzichtet, weil diese Arbeitsgänge aus der Dünnfilmtechnik jedem Fachmann bekannt sind.

Die Fig. 4 zeigt den schematischen Schnitt durch einen erfindungsgemäß aufgebauten Dünnschichtwiderstand. Der Widerstand enthält eine Trägerplatte 20 aus Aluminiumoxidkeramik, auf deren einer Oberfläche 21 und im Bereich zweier gegenüberliegender Seitenkanten zwei mehrschichtige Anschlußflächen 22, 23 aufgebracht sind. Die Anschlußflächen sind von einer zweischichtigen, mäanderförmigen Widerstandsbahn 24 elektrisch leitend miteinander verbunden. Die unterste, an der Trägerplatte anliegende Haftschicht 26 ist etwa 50 Å dick und besteht aus aufgestäubtem Tantal. Die darüberliegende Widerstandsschicht 27 ist beispielsweise 2000 Å dick und besteht aus Nickel. Von den drei weiteren Schichten der Anschlußflächen ist die untere Hilfsschicht 28 durch Kathodenzerstäubung aufgetragen, etwa 5000 Å dick und besteht vorzugsweise aus Kupfer oder Gold. Die beiden oberen Schichten 29, 30 sind galvanisch aufgetragen, etwa 2 bis 4 μ dick und bestehen aus Nickel bzw. Gold.

Die Hilfsschicht 28 ist bei Anwendung bestimmter Galvanoresiste nicht nötig und kann weggelassen werden.

Die Fig. 5 zeigt eine Draufsicht auf den Dünnschichtwiderstand gemäß der Fig. 4. Dabei versteht sich, daß die gezeigte mäanderförmige Leiterbahn 24 nicht typisch ist. Bei großen Widerstandswerten sind Mäander mit einer Bahnbreite von beispielsweise 40 μm gebräuchlich, für einen sehr kleinen Widerstandswert kann die Leiterbahn als geradlinige Verbindung zwischen den beiden Anschlußflächen 22, 23 ausgebildet sein.

Fig. 6 zeigt die Seitenansicht einer praktisch erprobten Ausführungsform des neuen Dünnschichtwiderstands. Dieser Widerstand enthält eine praktisch quadratische Trägerplatte 20 aus Aluminiumoxidkeramik mit einer Seitenlänge von etwa 5 mm. Die Anschlußfahnen 35 liegen an der Rückseite der Trägerplatte an und sind auf der Vorderseite an die Anschlußflächen 23 angelötet. Trägerplatte, Widerstand und die angelöteten Teile der Anschlußfahnen sind mit einer Schutzschicht 36 aus Epoxy abgedeckt. Die größte Dicke des Dünnschichtwiderstands im Bereich der Anschlußlötungen beträgt etwa 2,5 mm.

Für einen typischen Widerstand von 1,5 kΩ bei 20°C beträgt der temperaturabhängige Widerstand

$$R(\Theta) = 1372{,}0 \cdot (1 + 4{,}543 \cdot 10^{-3} \cdot \Theta + 6{,}08 \cdot 10^{-6} \cdot \Theta^2),$$

mit einer Toleranz, welche je nach Anforderung, beispielsweise $\pm 0{,}5°C$ im Temperaturbereich zwischen 20 bis 50°C und $\pm 0{,}6°C$ im Temperaturbereich von 0 bis 70°C beträgt. Die Langzeitstabilität wurde nach 1000 Std. bei einer Temperatur von 125°C mit $\Delta R/R < 0{,}1\%$ bestimmt.

Bezeichnungsliste

| | | |
|---|---|---|
| 10 | = | Kurve |
| 12 | = | Kurve |
| 14 | = | Kurve |
| 20 | = | Trägerplatte |
| 21 | = | Oberfläche |
| 22, 23 | = | Anschlußflächen |
| 24 | = | Widerstandsbahn |
| 26 | = | Haftschicht |
| 27 | = | Widerstandsschicht |
| 28 | = | Hilfsschicht |
| 29, 30 | = | galvanische Schichten |
| 35 | = | Anschlußfahnen |
| 36 | = | Schutzschicht |

**Patentansprüche**

1. Dünnschichtwiderstand, bestehend aus einem isolierenden Keramiksubstrat (20), einer Haftschicht (26) in Form einer Widerstandsbahn (24) mit zwei Anschlußflächen (22, 23) und einer darüberliegenden Nickelschicht (27) derselben Form mit einer Schichtdicke zwischen 0,05 μm und 0,8 μm, dadurch gekennzeichnet, daß die Nickelschicht (27) außerordentlich rein ist und der Temperaturkoeffizient zwischen $3 \cdot 10^{-3}/°C$ bis $6{,}2 \cdot 10^{-3}/°C$ beträgt und daß die Haftschicht (26) aus einem Metall besteht.

2. Dünnschichtwiderstand nach Anspruch 1, dadurch gekennzeichnet, daß das Metall der Haftschicht (26) Nickel ist.

3. Dünnschichtwiderstand nach Anspruch 1, dadurch gekennzeichnet, daß das Metall der Haftschicht (26) Tantal ist.

4. Verfahren zur Herstellung eines Dünnschichtwiderstandes mittels Kathodenzerstäubung nach Anspruch 1, dadurch gekennzeichnet, daß die Haftschicht (26) ohne negative Vorspannung an der Anode erzeugt, und zum Reinigen der Widerstandsschicht (27) durch partielle Umkehrung der Kathodenzerstäubung die Anode mit den Substraten an eine negative Vorspannung von −150 bis −50 Volt gelegt wird.

**Claims**

1. Thin-film resistor, consisting of an insulating ceramic substrate (20), an adhesive layer (26) in the form of a resistor track (24) with two connection surfaces (22, 23) and a nickel layer (27), located above these, having the same form and a layer thickness of between 0.05 μm and 0.8 μm, characterised in that the nickel layer (27) is extremely pure and the temperature coefficient is between $3 \times 10^{-3}/°C$ and $6.2 \times 10^{-3}/°C$, and that the adhesive layer (26) consists of a metal.

2. Thin-film resistor according to Claim 1, characterised in that the metal of the adhesive layer (26) is nickel.

3. Thin-film resistor according to Claim 1, characterised in that the metal of the adhesive layer (26) is tantalum.

4. Process for manufacturing a thin-film resistor according to Claim 1 by means of cathodic sputtering, characterised in that the adhesive layer (26) is produced without a negative bias voltage on the anode and, to purify the resistor layer (27) by partial reversal of the cathodic sputtering, a negative bias voltage of −150 to −50 volt is applied to the anode with the substrates.

**Revendications**

1. Résistance en couche mince consistant en un substrat isolant en céramique (20), une couche d'adhérence (26) ayant la forme d'une piste de résistance (24) comportant deux surfaces de connexion (22, 23) et une couche de nickel surjacente (27) de même forme présentant une épaisseur comprise entre 0,05 μm et 0,8 μm, caractérisée en ce que la couche de nickel (27) est extrêmement pure et présente un coefficient de température compris entre $3 \cdot 10^{-3}/°C$ et $6{,}2 \cdot 10^{-3}/°C$ et la couche d'adhérence (26) est en métal.

2. Résistance en couche mince suivant la revendication 1, caractérisée en ce que le métal de la couche d'adhérence (26) est du nickel.

3. Résistance en couche mince suivant la revendication 1, caractérisée en ce que le métal de la couche d'adhérence (26) est du tantale.

4. Procédé pour fabriquer une résistance en couche mince par pulvérisation cathodique suivant la revendication 1, caractérisé en ce que le couche d'adhérence (26) est produite sans polarisation négative à l'anode et, pour épurer la couche de résistance (27) par inversion partielle de la pulvérisation cathodique, l'anode avec le substrat est connectée à une polarisation négative de $-150$ à $-50$ V.

Fig. 1

Fig. 2

Fig. 3

Fig. 4

Fig. 5

Fig. 6